# EUROPÄISCHE PATENTSCHRIFT

(11) **EP 1 906 475 B1**
(45) Veröffentlichungstag und Bekanntmachung des Hinweises auf die Patenterteilung: **30.03.2011**
(21) Anmeldenummer: 07017357.0
(22) Anmeldetag: 05.09.2007
(51) Int. Cl.: H01M 6/38

(54) **Aktivierbare Batterie für elektronischen Artilleriezünder.**
Activitable battery for electronic artillery detonator
Batterie activable pour un détonateur électronique d'artellerie

(30) Priorität: 28.09.2006 DE 102006045953
(43) Veröffentlichungstag der Anmeldung: 02.04.2008
(73) Patentinhaber: JUNGHANS Microtec GmbH, 78655 Dunningen-Seedorf (DE)
(72) Erfinder: Glatthaar, Karl, 78727 Oberndorf (DE); Höni, Herbert, 78733 Aichhalden-Rötenberg (DE); Zinell, Alexander, 78048 Villingen-Schwenningen (DE)
(74) Vertreter: Diehl Patentabteilung

(56) Entgegenhaltungen:
- EP-A- 1 178 550
- EP-A- 1 467 423
- JP-A- 10 302 811
- US-A- 3 754 996
- US-A- 4 684 586

## Beschreibung

Die Erfindung betrifft eine aktivierbare Batterie für einen elektronischen Artillerie- und Mörserzünder gemäß dem Oberbegriff des Anspruches 1.

Eine derartige aktivierbare Batterie für einen elektronischen Artilleriezünder ist aus der DE 100 38 066 B4 der Anmelderin bekannt. Diese bekannte Batterie weist in einem becherförmigen Gehäuse, das durch ein Deckelelement verschlossen ist, eine mit einem Elektrolyten gefüllte Ampulle, einen Ampullen-Haltekörper und einen zentralen Massekörper, der über Kugel-Pillen-Führungen mit dem Ampullen-Haltekörper verbunden ist, auf. Diese drei Komponenten dieser bekannten Batterie sind in dem becherförmigen Gehäuse axial verstellbar angeordnet, so dass der Schutz der Ampulle gegen ungewollte bzw. unbeabsichtigte mechanische Belastungen noch Wünsche offen lassen kann.

Aus der US 3 754 996 A ist eine Batterie bekannt, welche eine mit einem Elektrolyten gefüllte Ampulle aus dehnbarem bzw. plastischem Material umfasst. Zur Aktivierung der Batterie ist vorgesehen, dass die Ampulle von innen heraus über eine innerhalb der Ampulle befindliche Anstechgabel, welche an einem Gewicht befestigt ist, angestochen wird. Dadurch kann der Elektrolyt aus der Ampulle auslaufen und Batteriezellen tränken.

Der Erfindung liegt deshalb die Aufgabe zugrunde, eine aktivierbare Batterie der eingangs genannten Art zu schaffen, deren Schutz gegen ungewollte mechanische Belastungen auf konstruktiv einfache Weise verbessert ist.

Diese Aufgabe wird erfindungsgemäß durch die Merkmale des Anspruches 1 gelöst. Bevorzugte Aus- bzw. Weiterbildungen der erfindungsgemäßen aktivierbaren Batterie sind in den Unteransprüchen gekennzeichnet.

Dadurch, dass bei der erfindungsgemäßen Batterie die Ampulle im Batterieunterteil unbeweglich angeordnet ist, ergibt sich der Vorteil, dass unbeabsichtigte bzw. ungewollte mechanische Belastungen, d.h. Störimpulse, nicht an die Ampulle gelangen. In vorteilhafter Weise ist die erfindungsgemäße Batterie für einen elektronischen Artillerie- und Mörserzünder dazu geeignet, die enorm hohen Sicherheits- und Zuverlässigkeits-Anforderungen neuer, moderner Waffensysteme bzw. der Komponenten unterschiedlicher Waffensysteme zu erfüllen. Ein weiterer Vorteil besteht darin, dass die erfindungsgemäße Batterie mit relativ kleinen Abmessungen, d.h. kompakt mit einem kleinen Durchmesser, realisierbar ist.

Weitere Vorteile der erfindungsgemäßen aktivierbaren Batterie bestehen neben ihrer vergleichsweise kompakten Bauweise darin, dass keine axiale Bewegung der Ampulle notwendig ist, um diese zur richtigen Zeit zu zerbrechen, dass der Einbau der Ampulle in die erfindungsgemäße Batterie sicher und zeitsparend möglich ist, dass Klebeverbindungen, wie sie bei anderen bekannten aktivierbaren Batterien erforderlich sind, entfallen, und dass ein sicheres Öffnen der Ampulle ladungsunabhängig möglich ist.

Weitere Einzelheiten, Vorteile und Merkmale ergeben sich aus der nachfolgenden.Beschreibung eines in der Zeichnung dargestellten Ausführungsbeispieles der erfindungsgemäßen aktivierbaren Batterie für einen elektronischen Artillerie- und Mörserzünder.

Es zeigen:
- Figur 1: einen Schnitt durch die aktivierbare Batterie entlang einer ersten Schnittebene, und
- Figur 2: einen Schnitt durch die aktivierbare Batterie gemäß Fig.1 entlang einer die Schnittebene gemäß Fig.1 kreuzenden Schnittebene.

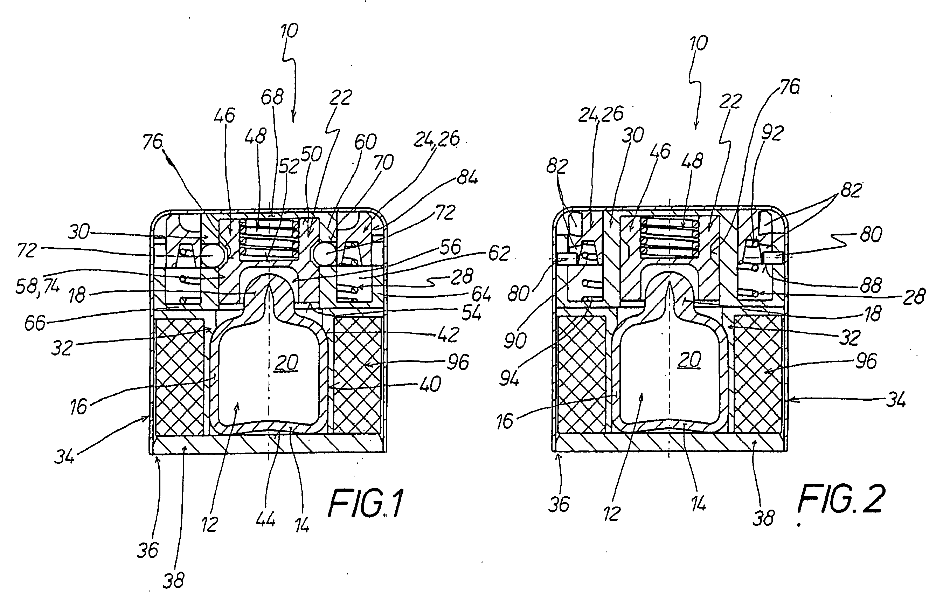

Die Figuren 1 und 2 verdeutlichen eine Ausbildung der aktivierbaren Batterie 10 für einen elektronischen Artillerie- und Mörserzünder. Die Batterie 10 weist eine Ampulle 12 auf, die einen Boden 14, eine vom Boden 14 wegstehende Seitenwandung 16 und einen Zapfen 18 aufweist, und die mit einem Elektrolyten 20 gefüllt ist.

Zum Zerbrechen der Ampulle 12 weist die Batterie 10 eine Aktivierungsvorrichtung 22 auf, die zur Auswertung der Dauer eines auf die Batterie 10 einwirkenden Kraftstoßes, d.h. mechanischen Impulses, durch ein Zeitglied 24 freigebbar ist. Das Zeitglied 24 weist einen axial und dabei drehverstellbaren Massekörper 26 auf, gegen den eine Druckfeder 28 wirksam ist.

Die aktivierbare Batterie 10 weist ein Batterieoberteil 30 und ein Batterieunterteil 32 auf, die in einem becherförmigen Gehäuse 34 aneinander anliegend vorgesehen sind. Die Becheröffnung 36 des becherförmigen Gehäuses 34 ist durch ein Deckelelement 38 dicht verschlossen.

Die mit dem Elektrolyten 20 gefüllte Ampulle 12 ist im Batterieunterteil 32 unbeweglich angeordnet. Zu diesem Zwecke liegt die Ampulle 12 mit ihrem Boden 14 am Deckelelement 38 des becherförmigen Gehäuses 34 an und ist mit ihrer Seitenwandung 16 an einem Elektrolyt-durchlässigen Ampullenaufnahmeabschnitt 40 des Batterieunterteils 32 festgelegt. Der Ampullenaufnahmeabschnitt 40 weist lichte Innenabmessungen auf, die an die Außenabmessungen der Seitenwandung 16 der Ampulle 12 spielfrei angepasst sind. Der Ampullenaufnahmeabschnitt 40 ist außerdem mit einer Rückhalteschulter 42 ausgebildet, um die Ampulle 12 zwischen ihr und dem Deckelelement 38 axial unbeweglich festzulegen.

Der Boden 14 der Ampulle 12 ist mit einer Eindellung 44 ausgebildet, um die Ampulle 12 zu gegebener Zeit zuverlässig zu zerbrechen.

Der vom Boden 14 abgewandte Zapfen 18 der Ampulle 12 ragt in das Batterieoberteil 30 hinein. Im Batterieoberteil 30 ist ein Ampullenstößel 46 und eine Stößelfeder 48 der Aktivierungsvorrichtung 22 vorgesehen. Der Ampullenstößel 46 ist an seiner vom Deckelelement 38 abgewandten Stirnseite 50 mit einem zentralen Sackloch 52 ausgebildet, in dem die Stößelfeder 48 angeordnet ist. Die Stößelfeder 48 ist von einer mechanisch vorgespannten Schraubendruckfeder gebildet.

Der Ampullenstößel 46 ist an seiner dem Deckelelement 38 zugewandten zweiten Stirnseite 54 mit einer zentralen Ausnehmung 56 ausgebildet, in die der Zapfen 18 der Ampulle 12 im inaktiven Lagerzustand allseitig geringfügig beabstandet hineinsteht.

Das Batterieoberteil 30 weist einen Zentralraum 58 für den Ampullenstößel 46 und für die Stößelfeder 48 sowie einen vom Zentralraum 58 durch eine Hülsenwand 60 beabstandeten Ringraum 62 auf, der außenseitig durch einen Ringkragen 64 begrenzt ist. Der Ringkragen 64 ist mit der Hülsenwand 60 durch einen ringförmigen Verbindungsabschnitt 66 materialeinstückig verbunden.

Der Zentralraum 58 des Batterieoberteils 30 ist oberseitig durch einen materialeinstückigen Deckel 68 verschlossen.

Die Hülsenwand 60 des Batterieoberteils 30 ist mit einer Anzahl Durchgangslöcher 70 ausgebildet, die in Umfangsrichtung der Hülsenwand 60 gleichmäßig verteilt vorgesehen sind. In jedem Durchgangsloch 70 ist eine Sperrkugel 72 angeordnet.

Der Ampullenstößel 46 ist an seiner zur Hülsenwand 60 benachbarten Außenmantelfläche 74 mit einer Ausnehmung 76 ausgebildet. Die Ausnehmung 76 ist als Rinne ausgebildet, die um die Außenmantelfläche 74 des Ampullenstößels 46 umläuft.

Wie aus Figur 2 ersichtlich ist, stehen vom Ringkragen 64 des Batterieoberteiles 30 Steuerbolzen 80 in zugehörige zick-zack-förmig abgewinkelte Rinnen 82 hinein, die in der Außenmantelfläche 84 des Massekörpers 26 ausgebildet sind. Bezüglich der Ausbildung der zick-zack-förmig abgewinkelten Rinnen 82 wird auch auf die eingangs genannte DE 100 38 066 B4 Bezug genommen.

Der Massekörper 26 ist als Massering ausgebildet, der im Ringraum 62 des Batterieoberteiles 30 impulsbedingt gegen die Federkraft der Druckfeder 28 verstellbar ist.

Die Außenmantelfläche 84 des Massekörpers 26 ist mit einer der Anzahl Steuerbolzen 80 entsprechenden Anzahl zick-zack-förmig abgewinkelte Rinnen 82 ausgebildet, die - wie die Steuerbolzen 80- in Umfangsrichtung gleichmäßig beabstandet ausgebildet sind.

Der Massering ist an seiner dem Deckelelement 38 zugewandten Stirnseite 88 mit einer umlaufenden Rinne 90 ausgebildet. Die Druckfeder 28 ist als Schraubendruckfeder ausgebildet und steht mit ihrem einen Endabschnitt 92 in die umlaufende Rinne 90 des Masseringes hinein. Das gegenüberliegende andere Ende 94 der Schraubendruckfeder 28 liegt am ringförmigen Verbindungsabschnitt 66 des Batterieoberteils 30 an.

Im Batterieunterteil 32 sind Batteriezellen 96 angeordnet, die von der Ampulle 12 durch den Elektrolyt-durchlässigen Ampullenaufnahmeabschnitt 40 beabstandet sind.

Die Funktionsweise der aktivierbaren Batterie 10 ist wie folgt:

Durch eine Abschussbeschleunigung wird der Massekörper 26 gegen die Druckfeder 28 in Richtung des Deckelelementes 38 bewegt. Durch den Eingriff der Steuerbolzen 80 in die an der Außenmantelfläche 84 des Massekörpers 26 zick-zack-förmig abgewinkelt ausgebildeten Rinnen 82 läuft die Bewegung des Massekörpers 26 nicht nur in axialer Richtung geradlinig ab, sondern der Massekörper 26 muss sich gleichzeitig mit der axialen Bewegung zuerst in die eine und danach in die entgegengesetzte andere Richtung drehen, um den Bewegungsweg des Massekörpers 26 durchzuführen. Diese Drehung und Umlenkung ist infolge des Trägheitsmomentes des Massekörpers 26 ein Zeitglied.

Die Abschussbeschleunigung muss in einer bestimmten Größe über eine bestimmte Zeitspanne anstehen, damit der Massekörper 26 seine Endstellung erreicht. Wenn der Massekörper 26 die Endstellung erreicht hat, wird über die Sperrkugeln 72 der Ampullenstößel 46 freigegeben. Durch die immer noch anstehende Abschussbeschleunigung und/oder durch die Entspannung der mechanisch gespannten Stößelfeder 48 wird der Ampullenstößel 46 gegen die im Batterieunterteil 32 fest eingebaute Ampulle 12 beschleunigt, die beim Aufprall des Ampullenstößels 46 auf dessen Zapfen 18 zerbricht und den in der Ampulle 12 befindlichen Elektrolyten 20 freisetzt. Der Ampullenstößel 46 wirkt als Kolben. Er presst in kurzer Zeit den Elektrolyten 20 in die Batteriezellen 96. Der Elektrolyt 20 dringt also in die Batteriezellen 96 ein, so dass die Batterie 10 sehr schnell ihre elektrische Spannung generiert.

Bei einer unbeabsichtigten Stoßbelastung der Batterie, d.h. bei einem Stoß in die kritische Richtung der Batterie 10, erfolgt der oben beschriebene Bewegungsablauf. Da Stöße unter Umständen wohl eine wesentlich größere Amplitude besitzen können, aber wesentlich kurzzeitiger sind, erfolgt eine Bewegung des Massekörpers 26 nur bis maximal kurz vor die Umlenkung der Steuerbolzen 80 in den zick-zack-förmig abgewinkelten Rinnen 82. Der Massekörper 26 wird jedoch kurz vor der besagten Umlenkung gestoppt und läuft in die Ausgangsposition zurück. Das System bleibt also sicher. Wesentlich dabei ist, dass die durch einen unbeabsichtigten Stoß bewirkte Beschleunigung des Massekörpers 26 zeitlich abgeklungen sein muss, bevor der Massekörper 26 die Umlenkstellen der zick-zack-förmig abgewinkelten Rinnen 82 erreicht. Durch entsprechende Dimensionierung der Masse des Massekörpers 26 und der Druckfeder 28 lässt sich dies problemlos realisieren, d.h. einstellen.

Da die Ampulle 12 im Batterieunterteil 32 unbeweglich eingebettet ist, ist sie bei jeder möglichen unbeabsichtigten Belastung optimal geschützt.

### Bezugsziffernliste:

- 10: aktivierbare Batterie
- 12: Ampulle (von 10 für 20)
- 14: Boden (von 12)
- 16: Seitenwandung (von 12)
- 18: Zapfen (von 12)
- 20: Elektrolyt (in 12 für 96)
- 22: Aktivierungsvorrichtung (von 10 für 12)
- 24: Zeitglied (von 22)
- 26: Massekörper (für 24)
- 28: Druckfeder (für 26)
- 30: Batterieoberteil (von 10 für 22)
- 32: Batterieunterteil (von 10 für 12)
- 34: becherförmiges Gehäuse (von 10)
- 36: Becheröffnung (von 34)
- 38: Deckelelement (in 36)
- 40: Ampullenaufnahmeabschnitt (von 32 für 12)
- 42: Rückhalteschulter (von 40)
- 44: Eindellung (von 14)
- 46: Ampullenstößel (von 22 für 12)
- 48: Stößelfeder (für 46)
- 50: Stirnseite (von 46)
- 52: zentrales Sackloch (in 50)
- 54: zweite Stirnseite (von 46)
- 56: zentrale Ausnehmung (in 54)
- 58: Zentralraum (von 30)
- 60: Hülsenwand (von 30)
- 62: Ringraum (von 30)
- 64: Ringkragen (von 30)
- 66: ringförmiger Verbindungsabschnitt (zwischen 60 und 64)
- 68: Deckel (von 30 für 58)
- 70: Durchgangsloch (in 60 für 72)
- 72: Sperrkugel (in 70)
- 74: Außenmantelfläche (von 46)
- 76: Ausnehmung (in 74)
- 80: Steuerbolzen (für 82)
- 82: zick-zack-förmig abgewinkelte Rinne (in 84)
- 84: Außenmantelfläche (von 26)
- 88: Stirnseite (von 26)
- 90: Rinne (in 88)
- 92: Endabschnitt (von 28 in 90)
- 94: Ende (von 28 an 66)
- 96: Batteriezellen (in 32)

## Patentansprüche

1. Aktivierbare Batterie (10) für einen elektronischen Artillerie- und Mörserzünder mit einer mit einem Elektrolyten (20) gefüllten Ampulle (12) und mit einer zum Zerbrechen der Ampulle (12) vorgesehenen Aktivierungvorrichtung (22), die zur Auswertung der Dauer eines auf die Batterie (10) einwirkenden mechanischen Impulses durch ein Zeitglied (24) freigebbar ist, das einen axial und dabei drehverstellbaren Massekörper (26) aufweist, gegen den eine Druckfeder (28) wirksam ist,
**dadurch gekennzeichnet, dass**
a, die Batterie (10) ein Batterieoberteil (30) und ein Batterieunterteil (32) aufweist,
b, die Ampulle (12) im Batterieunterteil (32) unbeweglich angeordnet ist,
c. die Aktivierungseinrichtung (22) im Batterieoberteil (30) vorgesehen ist und
d. die Aktivierungseinrichtung (22) einen Ampullenstößel (46) und eine Stößelfeder (48) aufweist, wobei der Ampullenstößel (46) über das Zeitglied (24) zum Zerbrechen der Ampulle (12) freigebbar ist.

2. Batterie (10) nach Anspruch 1,
**dadurch gekennzeichnet,**
**dass** das Batterieoberteil (30) und das Batterieunterteil (32) aneinander axial angrenzen.

3. Batterie (10) nach Anspruch 1 oder 2,
**dadurch gekennzeichnet,**
**dass** das Batterieoberteil (30) und das Batterieunterteil (32) in einem becherförmigen Gehäuse (34) angeordnet sind, dessen Becheröffnung (36) durch ein Deckelelement (38) verschlossen ist.

4. Batterie (10) nach Anspruch 3,
**dadurch gekennzeichnet,**
**dass** die Ampulle (12) mit ihrem Boden (14) am Deckelelement (38) des Gehäuses (34) anliegt und mit ihrer Seitenwandung (16) an einem Elektrolyt-durchlässigen Ampullenaufnahmeabschnitt (40) des Batterieunterteiles (32) festgelegt ist.

5. Batterie (10) nach einem der vorhergehenden Ansprüche,
**dadurch gekennzeichnet,**
**dass** die Ampulle (12), ihrem Boden (14) gegenüberliegend, mit einem Zapfen (18) ausgebildet ist, der in das Batterieoberteil (30) hineinragt.

6. Batterie (10) nach Anspruch 5,
**dadurch gekennzeichnet,**
**dass** der Ampullenstößel (46) an seiner dem Deckelelement (38) zugewandten zweiten Stirnseite (54) mit einer zentralen Ausnehmung (56) ausgebildet ist, in die der Ampullen-Zapfen (18) allseitig beabstandet hineinsteht.

7. Batterie (10) nach einem der vorhergehenden Ansprüche,
**dadurch gekennzeichnet,**
**dass** der Ampullenstößel (46) an seiner vom Deckelelement (38) abgewandten Stirnseite (50) mit einem zentralen Sackloch (52) ausgebildet ist, in dem die Stößelfeder (48) angeordnet ist.

8. Batterie (10) nach einem der vorhergehenden Ansprüche,
**dadurch gekennzeichnet,**
**dass** die Stößelfeder (48) als Schraubendruckfeder ausgebildet ist.

9. Batterie (10) nach einem der vorhergehenden Ansprüche,
**dadurch gekennzeichnet,**
**dass** der Ampullenstößel (46) als Kolben ausgebildet ist und der Kolben sowohl im Batterieoberteil (30) als auch im Batterieunterteil (32) geführt ist.

10. Batterie (10) nach einem der vorhergehenden Ansprüche,
**dadurch gekennzeichnet,**
**dass** das Batterieoberteil (30) einen Zentralraum (58) für den Ampullenstößei (46) und für die Stößelfeder (48) sowie einen vom Zentralraum (58) durch eine Hülsenwand (60) beabstandeten Ringraum (62) aufweist, der außenseitig durch einen Ringkragen (64) begrenzt ist,
der mit der Hülsenwand (60) durch einen ringförmigen Verbindungsabschnitt (66) verbunden ist.

11. Batterie (10) nach Anspruch 10,
**dadurch gekennzeichnet,**
**dass** die Hülsenwand (60) des Batterieoberteils (30) mindestens ein Durchgangsloch (70) für eine Sperrkugel (72) aufweist, dass der Ampullenstößel (46) an seiner zur Hülsenwand (60) benachbarten Außenmantelfläche (74) mit einer Ausnehmung (76) für die mindestens eine Sperrkugel (72) ausgebildet ist, und dass der Massekörper (26) als Massering ausgebildet ist, der im Ringraum (62) des Batterieoberteils (30) impulsbedingt axial gegen die Federkraft der Druckfeder (28) verstellbar ist.

12. Batterie (10) nach Anspruch 11,
**dadurch gekennzeichnet,**
**dass** der Massering an seiner dem Deckelelement (38) zugewandten Stirnseite (88) mit einer umlaufenden Rinne (90) ausgebildet ist, und dass die Druckfeder (28) als Schraubendruckfeder ausgebildet ist, die mit ihrem einen Endabschnitt (92) in die umlaufende Rinne (90) des Masseringes hineinsteht, und die mit ihrem gegenüberliegenden anderen Ende (94) an dem ringförmigen Verbindungsabschnitt (66) des Batterieoberteiles (30) anliegt.

13. Batterie (10) nach Anspruch 11 oder 12,
**dadurch gekennzeichnet,**
**dass** die Hülsenwand (60) des Batterieoberteils (30) eine Anzahl Durchgangslöcher (70) aufweist, die in Umfangsrichtung der Hülsenwand (60) gleichmäßig verteilt vorgesehen sind, und in welchen jeweils eine Sperrkugel (72) vorgesehen ist, und dass die Ausnehmung (76) im Ampullenstößel (46) als Rinne ausgebildet ist, die um die Außenmantelfläche (74) des Ampullenstößels (46) umläuft.

14. Batterie (10) nach einem der Ansprüche 10-13,
**dadurch gekennzeichnet,**
**dass** vom Ringkragen (64) des Batterieoberteils (30) mindestens ein Steuerbolzen (80) in eine zugehörige zick-zack-förmig abgewinkelte Rinne (82) hineinsteht, die in der Außenmantelfläche (84) des Massekörpers (26) ausgebildet ist.

15. Batterie (10) nach Anspruch 14,
**dadurch gekennzeichnet,**
**dass** vom Ringkragen (64) des Batterieoberteils (30) eine Anzahl Steuerbolzen (80) in Umfangsrichtung gleichmäßig beabstandet wegstehen, und dass die Außenmantelfläche (84) des Massekörpers (26) mit einer der Anzahl Steuerbolzen (80) entsprechenden Anzahl zick-zack-förmig abgewinkelten Rinnen (82) ausgebildet ist, die voneinander gleichmäßig beabstandet sind.

## Claims

1. Reserve-electrolyte battery (10) for an electronic artillery and mortar fuze having an ampoule (12) which is filled with an electrolyte (20) and having an activation apparatus (22) which is intended to break the ampoule (12) and can be released by a timer (24) in order to evaluate the duration of a mechanical impulse acting on the battery (10), which timer (24) has a mass body (26), which can be moved axially and in the process rotates, against which a compression spring (28) acts,
**characterized in that**
a. the battery (10) has a battery upper part (30) and a battery lower part (32),
b. the ampoule (12) is arranged in the battery lower part (32) such that it cannot move,
c. the activation device (22) is provided in the battery upper part (30) and
d. the activation device (22) has an ampoule plunger (46) and a plunger spring (48), wherein the ampoule plunger (46) can be released via the timer (24) in order to break the ampoule (12).

2. Battery (10) according to Claim 1,
**characterized**
**in that** the battery upper part (30) and the battery lower part (32) are axially adjacent to one another.

3. Battery (10) according to Claim 1 or 2,
**characterized**
**in that** the battery upper part (30) and the battery lower part (32) are arranged in a housing (34) in the form of a cup, whose cup opening (36) is closed by a cover element (38).

4. Battery (10) according to Claim 3,
**characterized**
**in that** the base (14) of the ampoule (12) rests on the cover element (38) of the housing (34), and the side wall (16) of the ampoule (12) is fixed to an ampoule accommodation section (40), through which electrolyte can pass, of the battery lower part (32).

5. Battery (10) according to one of the preceding claims,
**characterized**
**in that**, opposite its base (14), the ampoule (12) has a pin (18) which projects into the battery upper part (30).

6. Battery (10) according to Claim 5,
**characterized**
**in that** the ampoule plunger (46) has a central recess (56) on its second end face (54) facing the cover element (38), into which central recess (56) the ampoule pin (18) projects, separated on all sides.

7. Battery (10) according to one of the preceding claims,
**characterized**
**in that** the ampoule plunger (46) has a central blind hole (52) on its end face (50) facing away from the cover of the element (38), in which the plunger spring (48) is arranged.

8. Battery (10) according to one of the preceding claims,
**characterized**
**in that** the plunger spring (48) is in the form of a helical compression spring.

9. Battery (10) according to one of the preceding claims,
**characterized**
**in that** the ampoule plunger (46) is in the form of a piston, and the piston is guided both in the battery upper part (30) and in the battery lower part (32).

10. Battery (10) according to one of the preceding claims,
**characterized**
**in that** the battery upper part (30) has a central area (58) for the ampoule plunger (46) and for the plunger spring (48), as well as an annular area (62), which is separated from the central area (58) by a sleeve wall (60) and is bounded on the outside by an annular collar (64), which is connected to the sleeve wall (60) by an annular connecting section (66).

11. Battery (10) according to Claim 10,
**characterized**
**in that** the sleeve wall (60) of the battery upper part (30) has at least one through-hole (70) for a blocking ball (72), in that the ampoule plunger (46) has a recess (76) for the at least one blocking ball (72) on its outer envelope surface (74) adjacent to the sleeve wall (60), and in that the mass body (26) is in the form of a mass ring which can be moved axially against the spring force of the compression spring (28) in the annular area (62) of the battery upper part (30), by an impulse.

12. Battery (10) according to Claim 11,
**characterized**
**in that** the mass ring has a circumferential groove (90) on its end face (88) facing the cover element (38), and in that the compression spring (28) is in the form of a helical compression spring whose end section (92) projects into the circumferential groove (90) of the mass ring, and its opposite other end (94) rests on the annular connecting section (66) of the battery upper part (30).

13. Battery (10) according to Claim 11 or 12,
**characterized**
**in that** the sleeve wall (60) of the battery upper part (30) has a number of through-holes (70), which are provided uniformly distributed in the circumferential direction of the sleeve wall (60) and in each of which a blocking ball (72) is provided, and in that the recess (76) in the ampoule plunger (46) is in the form of a groove, which runs around the outer envelope surface (74) of the ampoule plunger (46).

14. Battery (10) according to one of Claims 10-13,
**characterized**
**in that** at least one control bolt (80) projects from the annular collar (64) of the battery upper part (30) into an associated groove (82), which is angled in a zigzag shape and is formed in the outer envelope surface (84) of the mass body (26).

15. Battery (10) according to Claim 14,
**characterized**
**in that** a number of control bolts (80) project away at uniform intervals in the circumferential direction from the annular collar (64) of the battery upper part (30), and in that the outer envelope surface (84) of the mass body (26) has a number of grooves (82), corresponding to the number of control bolts (80), which are angled in a zigzag shape and are uniformly separated from one another.

## Revendications

1. Batterie activable (10) pour un détonateur électronique d'artillerie et de mortier comprenant une ampoule (12) remplie d'un électrolyte (20) et comprenant un dispositif d'activation (22) prévu pour briser l'ampoule (12), lequel peut être libéré pour évaluer la durée d'une impulsion mécanique qui agit sur la batterie (10) par un temporisateur (24), lequel présente un poids (26) positionnable dans le sens axial et ainsi rotatif contre lequel agit un ressort de compression (28), **caractérisée en ce que**
a. la batterie (10) présente une partie supérieure de batterie (30) et une partie inférieure de batterie (32),
b. l'ampoule (12) est disposée sans pouvoir bouger dans la partie inférieure de batterie (32),
c. le dispositif d'activation (22) est prévu dans la partie supérieure de batterie (30),
d. le dispositif d'activation (22) présente un poussoir d'ampoule (46) et un ressort de poussoir (48), le poussoir d'ampoule (46) pouvant être libéré par le biais du temporisateur (24) pour briser l'ampoule (12).

2. Batterie (10) selon la revendication 1, **caractérisée en ce que** la partie supérieure de batterie (30) et la partie inférieure de batterie (32) sont juxtaposées l'une à l'autre dans le sens axial.

3. Batterie (10) selon la revendication 1 ou 2, **caractérisée en ce que** la partie supérieure de batterie (30) et la partie inférieure de batterie (32) sont disposées dans un boîtier (34) en forme de godet dont l'ouverture de godet (36) est fermée par un élément de couvercle (38).

4. Batterie (10) selon la revendication 3, **caractérisée en ce que** l'ampoule (12) repose avec son fond (14) sur l'élément de couvercle (38) du boîtier (34) et avec sa paroi latérale (16) sur une section d'accueil d'ampoule (40) de la partie inférieure de batterie (32) qui est perméable à l'électrolyte.

5. Batterie (10) selon l'une des revendications précédentes, **caractérisée en ce que** l'ampoule (12), à l'opposé de son fond (14), est configurée avec un tourillon (18) qui fait saillie dans la partie supérieure de batterie (30).

6. Batterie (10) selon la revendication 5, **caractérisée en ce que** le poussoir d'ampoule (46), au niveau de son deuxième côté frontal (54) qui fait face à l'élément de couvercle (38), est configuré avec un évidement central (56) dans lequel entre le tourillon d'ampoules (18) en étant espacé de tous les côtés.

7. Batterie (10) selon l'une des revendications précédentes, **caractérisée en ce que** le poussoir d'ampoule (46), au niveau de son côté frontal (50) qui est à l'opposé de l'élément de couvercle (38), est configuré avec un trou borgne central (52) dans lequel est disposé le ressort de poussoir (48).

8. Batterie (10) selon l'une des revendications précédentes, **caractérisée en ce que** le ressort de poussoir (48) est réalisé sous la forme d'un ressort de compression hélicoïdal.

9. Batterie (10) selon l'une des revendications précédentes, **caractérisée en ce que** le poussoir d'ampoule (46) est réalisé sous la forme d'un piston et le piston est guidé à la fois dans la partie supérieure de batterie (30) et dans la partie inférieure de batterie (32).

10. Batterie (10) selon l'une des revendications précédentes, **caractérisée en ce que** la partie supérieure de batterie (30) présente un espace central (58) pour le poussoir d'ampoule (46) et pour le ressort de poussoir (48) ainsi qu'un espace annulaire (62) espacé de l'espace central (58) par une paroi en manchon (60) et délimité du côté extérieur par une collerette annulaire (64), laquelle est reliée avec la paroi en manchon (60) par une section de liaison (66) de forme annulaire.

11. Batterie (10) selon la revendication 10, **caractérisée en ce que** la paroi en manchon (60) de la partie supérieure de batterie (30) présente au moins un trou traversant (70) pour une bille de blocage (72), que le poussoir d'ampoule (46), au niveau de sa surface d'enveloppe extérieure (74) qui est voisine de la paroi en manchon (60), est configuré avec un évidement (76) pour l'au moins une bille de blocage (72) et que le poids (26) est réalisé sous la forme d'une masse annulaire qui est positionnable dans l'espace annulaire (62) de la partie supérieure de batterie (30) sous l'effet de l'impulsion dans le sens axial à l'opposé de la force de ressort du ressort de compression (28).

12. Batterie (10) selon la revendication 11, **caractérisée en ce que** la masse annulaire, au niveau de son côté frontal (88) qui fait face à l'élément de couvercle (38), est configurée avec un canal périphérique (90) et que le ressort de compression (28) est réalisé sous la forme d'un ressort de compression hélicoïdal dont une section d'extrémité (92) entre dans le canal périphérique (90) de la masse annulaire et dont l'autre extrémité opposée (94) repose sur la section de liaison (66) de forme annulaire de la partie supérieure de batterie (30).

13. Batterie (10) selon la revendication 11 ou 12, **caractérisée en ce que** la paroi en manchon (60) de la partie supérieure de batterie (30) présente une pluralité de trous traversants (70) qui sont prévus avec une distribution régulière dans le sens du pourtour de la paroi en manchon (60) et dans lesquels est à chaque fois prévue une bille de blocage (72) et que l'évidement (76) dans le poussoir d'ampoule (46) est réalisé sous la forme d'un canal qui s'étend autour de la surface d'enveloppe extérieure (74) du poussoir d'ampoule (46).

14. Batterie (10) selon l'une des revendications 10 à 13, **caractérisée en ce qu'**au moins un goujon de commande (80) entre depuis la collerette annulaire (64) de la partie supérieure de batterie (30) dans un canal (82) associé coudé en forme de zigzag, lequel est réalisé dans la surface d'enveloppe extérieure (84) du poids (26).

15. Batterie (10) selon la revendication 14, **caractérisée en ce qu'**une pluralité de goujons de commande (80) répartis régulièrement dans le sens du pourtour s'écartent de la collerette annulaire (64) de la partie supérieure de batterie (30) et que la surface d'enveloppe extérieure (84) du poids (26) est
configurée avec un nombre de canaux (82) coudés en forme de zigzag correspondant au nombre de goujons de commande (80), lesquels sont espacés régulièrement les uns des autres.
